# EUROPÄISCHE PATENTSCHRIFT

(11) **EP 1 138 820 B1**
(45) Veröffentlichungstag und Bekanntmachung des Hinweises auf die Patenterteilung: **14.06.2006**
(21) Anmeldenummer: 01103942.7
(22) Anmeldetag: 19.02.2001
(51) Int. Cl.: D21B 1/32, D21C 9/08, D21F 1/70, D21D 5/02

(54) **Verfahren zur Entfernung von feinen partikelförmigen Verunreinigungen aus Altpapierfaserstoff**
Process for the removal of fine particle-shaped impurities from waste paper pulp
Procédé d'élimination d'impurétés sous forme de particules fines de pâte de vieux papiers

(30) Priorität: 28.03.2000 DE 10015355
(43) Veröffentlichungstag der Anmeldung: 04.10.2001
(73) Patentinhaber: Voith Paper Patent GmbH, 89522 Heidenheim (DE)
(72) Erfinder: Gommel, Axel, 88214 Ravensburg (DE)

(56) Entgegenhaltungen:
- EP-A- 0 931 872
- GB-A- 2 036 603

## Beschreibung

Die Erfindung bezieht sich auf ein Verfahren zur Entfernung von feinen partikelförmigen Verunreinigungen, insbesondere Mikro-Stickies aus Altpapierfaserstoff, bei dem der Altpapierfaserstoff zunächst in Wasser aufgelöst wird und die so gebildete Faserstoffsuspension verschiedene Reinigungsstufen durchläuft.

Bekanntlich ist beim Einsatz von störstoffhaltigem Altpapier zur Papiererzeugung zumeist ein beträchtlicher Aufwand erforderlich, um die Störstoffe zu entfernen. Dazu werden Sortierverfahren (Nasssiebung), Waschverfahren, Flotationsverfahren, Sedimentationsverfahren (Hydrozyklone) oder Kombinationen dieser Verfahren angewendet. Das Größenspektrum der ausgeschiedenen Störstoffe ist dann bei solchen Verfahren recht unterschiedlich. Verfahren der hier behandelten Art befassen sich mit der Entfernung von feinen Verunreinigungen, insbesondere von sogenannten Mikro-Stickies. Stickies sind ganz allgemein klebende Verunreinigungen und stammen zum größten Teil aus Kleberücken und sonstigen bei der Verwendung des eingesammelten Altpapiers benutzten Klebstoffen. Stickies werden bei dem Aufbereitungsprozess des Altpapieres sehr schnell zerkleinert, was dazu führt, dass ihre Entfernung immer schwieriger wird. Es gibt aber auch Stickies, die bereits beim Ablösen von der Papierfaser in sehr feiner Form vorliegen. Solche stammen z.B. aus dünnen klebenden Beschichtungen. Mikro-Stickies sind in der Regel so klein, dass sie bei einem Test nach "Somerville" mit 150 µm Schlitzweite in den Durchgang gelangen. Das gängigste Verfahren, um Stickies aus der Papiersuspension zu entfernen, ist die Sortierung, bei der also die Fasern das Sortierersieb als Gutstoff passieren und die Stickies als Rejekt zurückgehalten werden. Dieses Verfahren bringt bei feinen Verunreinigungen, z.B. den beschriebenen Mikro-Stickies, oft sehr unbefriedigende Ergebnisse. Daher bleiben die Mikro-Stickies zu einem großen Teil im aufbereiteten Altpapierstoff und gelangen auf die Papiermaschine. Besonders störend ist dabei, dass die ursprünglich sehr kleinen Partikel in der Suspension zu größeren Stickies zusammenwachsen oder sich an bestimmten Stellen der Papiermaschine ansammeln können. Das führt zu beträchtlichen Störungen bei der Papiererzeugung.

Aus der europäischen Patentanmeldung 0 931 872 A1 ist ein Verfahren zur Entfernung von feinen Verunreinigungen aus einer Faserstoffsuspension bekannt, bei dem mehrere Nasssieb-Maschinen eingesetzt werden. Deren Rejektfraktionen werden von Stufe zu Stufe mit Unrat angereichert. Die Papierfasern gelangen in den jeweiligen Durchlauf und werden als Gutstoff zu Papier verarbeitet, nachdem vorher die durch die letzte Siebstufe im Durchlauf mitgeschleppten feinen Verunreinigungen ausflotiert worden sind.

Zwar ist es aus der GB 2 036 603 A auch bekannt, eine Filtervorrichtung so auszulegen und einzusetzen, dass mit dem Überlauf auch Fasern abgeführt werden können. Dem Filter wird aber ein Flotationsschaum zugeführt, der also überwiegend Schmutz und nur wenige Fasern enthält.

Der Erfindung liegt die Aufgabe zu Grunde, ein Verfahren zu schaffen, mit dem es gelingt, aus einer papierfaserhaltigen Suspension auch die feinen partikelförmigen Verunreinigungen, insbesondere Mikro-Stickies mit vertretbarem Aufwand zu entfernen.

Diese Aufgabe wird durch die im Anspruch 1 beschriebenen Merkmale vollständig gelöst.

Das neue Verfahren wendet eine spezielle Feinfraktionierung an, die so eingestellt ist, dass die abzuscheidenden feinen Verunreinigungen in die Feinfraktion gelangen. Dabei sollte sich auf dem der Fraktionierung dienenden Trennelement in der Regel keine Filterhilfsschicht bilden. Eine solche würde nämlich nur die chemisch gelösten Bestandteile durchlassen, nicht jedoch die partikelförmigen feinen Verunreinigungen, zu deren Abtrennung das Verfahren dient. Eine solche Feinfraktionierung ist besonders effektiv mit Drucksortierem möglich, deren Siebkorb mit so kleinen Öffnungen versehen ist, dass bei bestimmungsgemäßem Betrieb der überwiegende Anteil der Papierfasern abgewiesen wird, also in den Überlauf gelangt. Das bedeutet, dass der Drucksortierer nicht wie üblich dazu verwendet wird, den Papierfaserstoff mit dem Durchlauf passieren zu lassen und die Verunreinigungen als Überlauf abzuscheiden.

In vielen Fällen enthält die erfindungsgemäße gewonnene Feinfraktion neben den unerwünschten Störstoffpartikeln auch noch solche Feststoffe, die an sich zur Papiererzeugung geeignet oder erwünscht sind. Das sind insbesondere die Faserfeinstoffe, also Bruchstücke von Fasern, die zur Festigkeitserhöhung und Homogenität des Papieres beitragen können. Darüberhinaus können auch mineralische Füllstoffe enthalten sein. Die Rückgewinnung solcher Fein- und Füllstoffe erfolgt am besten dadurch, dass die Feinfraktion einer selektiven Flotation zugeführt wird. Bei einer solchen werden bekanntlich die hydrophilen Partikel nicht in den Schaum abgeführt, sondern als Gutstoff weiterverwendet.

In anderen Fällen kann es aber erwünscht sein, alle in der Feinfraktion enthaltenen Feststoffpartikel zu entfemen, z.B. um den Stoff zu entaschen. Dafür ist die Klärflotation besonders geeignet. Diese ist oft ohnehin vorhanden, um den Rückwasserstrom aus anderen Teilen der Papierfabrik zu klären und ein wiederverwendbares Rückwasser zu erzeugen.

Es sind Waschverfahren bekannt, bei denen ein großer Teil der feinen Feststoffpartikel zusammen mit den Fasern zurückgehalten wird. Solche Verfahren sind zur Ausscheidung von partikelförmigen Störstoffen der hier betrachteten Feinheit nicht geeignet, da diese in der Filterschicht hängen bleiben können.

Die Erfindung und ihre Vorteile werden erläutert an Hand von Zeichnungen. Dabei zeigen:
- Fig. 1: eine schematische Darstellung des erfindungsgemäßen Verfahrens;
- Fig. 2 und 3: jeweils stark vereinfachte Anlagenschemata zur Durchführung des Verfahrens.

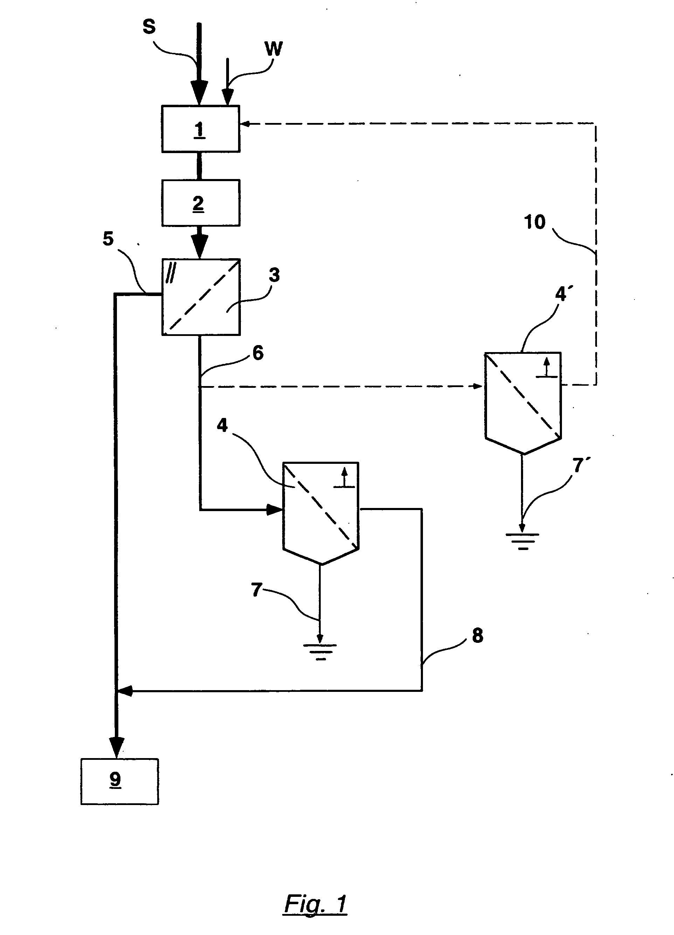

Das Verfahrensschema der Fig. 1 zeigt zunächst, dass der Altpapierfaserstoff S zusammen mit Wasser W einer Auflösung 1 zugeführt wird, in der er pumpfähig suspendiert und in einer sich anschließenden Vorreinigung 2 von einem Teil der Verunreinigungen, insbesondere den größeren befreit wird. Es folgt dann im Verfahrensablauf die Feinfraktionierung 3, die mit Vorteil als Nasssiebung mit einem mit feinen Schlitzen versehenen Sieb durchgeführt wird. Die am Sieb dieser Feinsortierung 3 abgewiesene Grobfraktion 5 enthält den überwiegenden Anteil der Papierfasern und gelangt zur Weiterverarbeitung 9. Die Feinfraktion 6, also der Siebdurchlauf, wird einem nachfolgenden Flotationsvorgang 4 zugeführt, welcher selektiv arbeitet. Damit ist gemeint, dass die Verunreinigungen, insbesondere die Mikro-Stickies, auf Grund ihrer Hydrophobie in den Flotationsschaum gelangen und als Flotationsrejekt 7 abgeführt werden, während die hydrophilen Fasern zum überwiegenden Teil nicht von den Luftblasen ausgetragen werden. Sie gelangen dann also als Flotationsgutstoff 8 aus dieser Stufe wieder heraus und können, wie hier dargestellt, auf dem Wege zur Weiterverarbeitung 9 der Grobfraktion 5 wieder zugeleitet werden. Auf diese Weise ist die Faserausbeute besonders hoch, verbunden mit einer sehr effektiven Abscheidung der Mikro-Stickies.

Die Feinfraktion 6 kann aber auch in einem andersartigen Flotationsvorgang 4' vollständig entstofft werden, wozu bekanntlich eine Mikroflotation, auch Klärflotation genannt, besonders geeignet ist. Diese Alternative ist rechts in Fig. 1 durch gestrichelte Pfeile dargestellt. Solche Verfahren sind bekannt. Sie arbeiten oft mit sehr kleinen Luftblasen, die durch Entspannung der mit gelöster Luft angereicherten Suspension gebildet werden. Das so gewonnene Klarwasser 10 kann z.B. in der Auflösung 1 verwendet werden, während der Flotationsrejekt 7' aus diesem Flotationsvorgang 4' entsorgt wird.

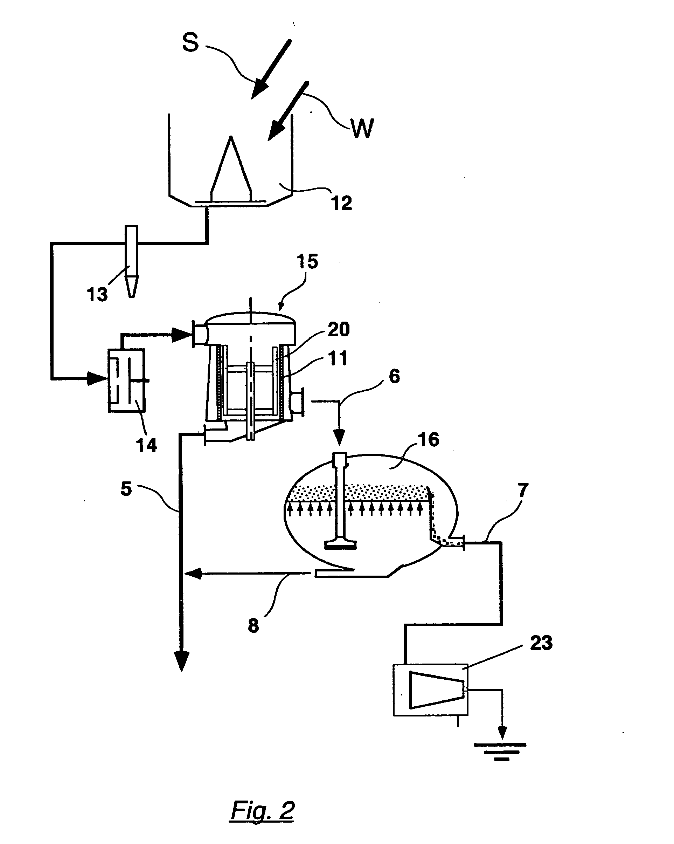

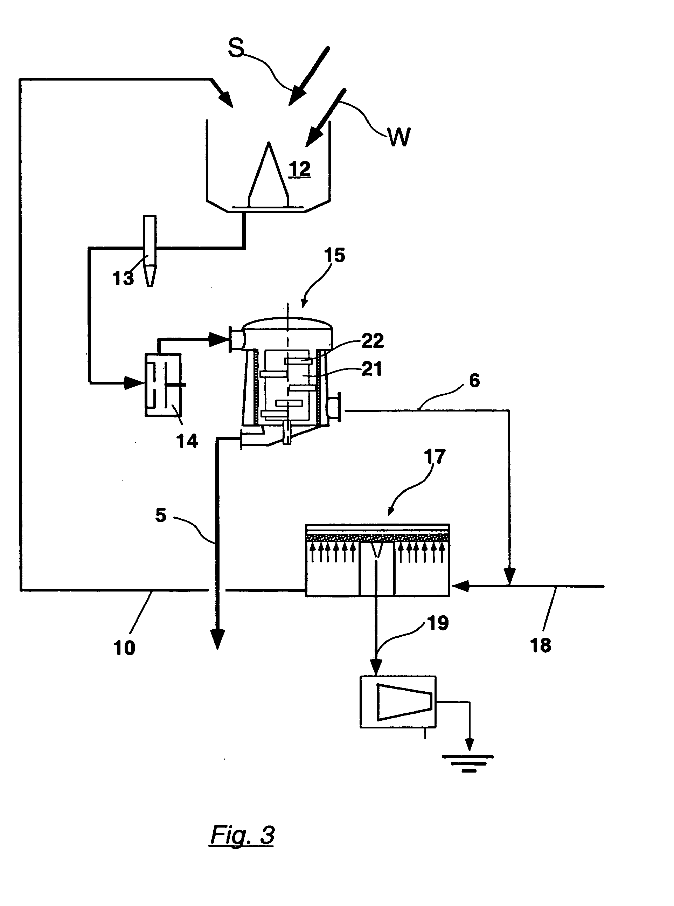

In den Figuren 2 und 3 sind die zur Durchführung der Verfahrensschritte geeigneten Apparaturen skizziert. Man erkennt, dass nach dem Stofflöser 12 z.B. mindestens ein Hydrozyklon 13 sowie mindestens ein Entstipper 14 eingesetzt werden, um den aufgelösten Altpapierfaserstoff S sortierbar zu machen. Unter Umständen kann diese Vorbehandlung noch beträchtlich erweitert werden. Zur Feinfraktionierung 3 wird ein Drucksortierer 15 verwendet, dessen Siebelement 11, wie schon erwähnt, z.B. mit sehr feinen Schlitzen ausgestattet ist. Anders als bei der üblichen Stoffsortierung wird der Drucksortierer 15 so betrieben, dass die Papierfasern in den Überlauf gelangen, so dass sie als Grobfraktion 5 abgeleitet werden können. Das Verstopfen des Siebelementes wird durch eine Anzahl von bewegten Siebräumern 20 verhindert. Diese können mit Vorteil foilförmig sein, um das Passieren der feinen Partikel durch das Siebelement 11 zu fördern. Aber auch auf einen trommelförmigen Rotor 21 aufgesetzte Räumflügel 22 können bei dem Verfahren günstig sein, wie in Fig. 3 gezeigt. Die das Siebelement 11 passierenden Anteile gelangen als Feinfraktion 6 in eine Flotationszelle 16. Diese arbeitet selektiv, d.h. der in ihr gewonnene Flotationsgutstoff 8 ist faserhaltig und kann mit Vorteil zur Grobfraktion 5 zugeführt werden. Der Flotationsrejekt 7 gelangt nach einer Eindickung 23 in die Entsorgung. Das Schema ist stark vereinfacht, es zeigt z.B. nicht die Pumpen, Bütten, Motoren oder Regler.

In Fig. 3 ist als Alternative die schon erwähnte Entstoffung der Feinfraktion 6 gezeigt. Hierzu dient eine Klärflotationszelle 17, die nicht nur die Feinfraktion 6, sondern auch weitere aus der Papierfabrikation stammenden Rückwasser aufnimmt und so ein Rückwasser 18 bildet, welches hier wiederum zur Auflösung des frisch eingetragenen Altpapiers verwendet werden kann. Der Rejekt 19 dieser Klärflotation wird wiederum verworfen.

## Patentansprüche

1. Verfahren zur Entfernung von feinen partikelförmigen Verunreinigungen, insbesondere Mikro-Stickies, aus Altpapierfaserstoff (S),
bei dem der Altpapierfaserstoff (S) nach seiner Suspendierung in Wasser (W), der sogenannten Auflösung (1), und eventueller Vorreinigung (2) durch mindestens eine ein Siebelement (11) verwendende Feinfraktionierung (3) geführt wird,
deren Feinfraktion (6) die feinen Verunreinigungen und deren Grobfraktion (5) den überwiegenden Teil der Papierfasern abführt,
wobei die Sieböffnungen der Siebelemente (11) Schlitze sind mit einer Weite von höchstens 0,15 mm oder Rundlöcher mit einem Durchmesser von höchstens 2 mm,
wobei die Feinfraktionierung (3) bei einer Zulauf-Stoffdichte zwischen 0,5 und 2,5 % durchgeführt wird und
wobei danach aus der Feinfraktion (6) durch einen Flotationsvorgang (4, 4') die feinen Verunreinigungen im Schaum gesammelt und entfernt werden.

2. Verfahren nach Anspruch 1,
**dadurch gekennzeichnet,**
**dass** die Feinfraktionierung (3) und der Flotationsvorgang (4) so eingestellt werden, dass der Flotationsgutstoff (8) des Flotationsvorgangs (4) Bestandteile enthält, insbesondere Papierfaserfeinstoff, die zur Papiererzeugung geeignet sind.

3. Verfahren nach Anspruch 1 oder 2,
**dadurch gekennzeichnet,**
**dass** der Flotationsgutstoff (8) zumindest teilweise der Grobfraktion (5) aus der Feinfraktionierung (3) zugeleitet wird.

4. Verfahren nach Anspruch 1,
**dadurch gekennzeichnet,**
**dass** die Feinfraktion (6) in einem Flotationsvorgang (4') entstofft und so ein Klarwasser (10) erzeugt wird.

5. Verfahren nach Anspruch 1, 2, 3 oder 4,
**dadurch gekennzeichnet,**
**dass** die Feinfraktionierung (3) in einem Drucksortierer (15) durchgeführt wird, der mindestens ein mit Öffnungen versehenes Siebelement (11) enthält, und zwar in der Weise, dass die Grobfraktion (5) durch den Überlauf und die Feinfraktion (6) durch den Durchlauf gebildet werden:

6. Verfahren nach Anspruch 5,
**dadurch gekennzeichnet,**
**dass** das Siebelement (11) durch foilartige Siebräumer (20) von Verstopfungen freigehalten wird.

7. Verfahren nach Anspruch 5,
**dadurch gekennzeichnet,**
**dass** das Siebelement (11) durch auf einen trommelförmigen Rotor (21) aufgesetzte Räumerflügel (22), die sich mindestens über 200 mm am Umfang erstrecken, von Verstopfungen freigehalten wird.

8. Verfahren nach einem der voranstehenden Ansprüche,
**dadurch gekennzeichnet,**
**dass** die Feinfraktionierung (3) so eingestellt wird, dass die Feinfraktion (6) feine Verunreinigungen enthält mit einem Korngrößen- Spektrum, das signifikant nicht größer ist als 150 µm.

9. Verfahren nach einem der voranstehenden Ansprüche,
**dadurch gekennzeichnet,**
**dass** die Feinfraktionierung (3) so eingestellt wird, dass die in der Feinfraktion (6) enthaltenen feinen Verunreinigungen ein Korngrößen- Spektrum aufweisen, das im Testverfahren "Somerville" als Durchgang bei einer Schlitzweite von 150 µm anfällt.

10. Verfahren nach einem der voranstehenden Ansprüche,
**dadurch gekennzeichnet,**
**dass** als feine Verunreinigungen kleine Klebepartikel, sogenannte Mikro-Stickies, entfernt werden.

11. Verfahren nach einem der voranstehenden Ansprüche,
**dadurch gekennzeichnet,**
**dass** die Feinfraktionierung (3) bei einer Zulauf-Stoffdichte zwischen 0,5 und 1,5 % durchgeführt wird.

12. Verfahren nach einem der voranstehenden Ansprüche,
**dadurch gekennzeichnet,**
**dass** die Feinfraktionierung (3) bei einer Temperatur zwischen 40° und 80° C durchgeführt wird.

## Claims

1. Process for the removal of fine particulate impurities, in particular microstickies, from waste paper pulp (S),
in which, after being suspended in water (W), so-called repulping (1), and possible precleaning (2), the waste paper pulp (S) is conveyed through at least one fine fractionation system (3) which uses a screen element (11),
the fine fraction (6) of which carries off the fine impurities and the coarse fraction (5) of which carries off the majority of the papermaking fibres,
wherein the screen apertures of the screen elements (11) are slots with a width of at most 0.15 mm or round holes with a diameter of at most 2 mm,
wherein the fine fractionation (3) is carried out with a feed consistency of between 0.5 and 2.5 % and
wherein afterwards, by means of a flotation operation (4, 4'), the fine impurities are collected in the foam and removed from the fine fraction (6).

2. Process according to Claim 1,
**characterised in**
**that** the fine fractionation (3) and the flotation operation (4) are adapted such that the flotation accepts (8) of the flotation operation (4) contain constituents, in particular papermaking fibre fines, which are suitable for papermaking.

3. Process according to Claim 1 or 2,
**characterised in**
**that** the flotation accepts (8) are fed at least in part to the coarse fraction (5) from the fine fractionation (3).

4. Process according to Claim 1,
**characterised in**
**that** the fine fraction (6) is defibred in a flotation operation (4) and clarified water (10) is thus produced.

5. Process according to Claim 1, 2, 3 or 4
**characterised in**
**that** the fine fractionation (3) is carried out in a pressure sorter (15), which contains at least one screen element (11) provided with apertures, such that the coarse fraction (5) is formed by the overflow and the fine fraction (6) by the through-flow.

6. Process according to Claim 5,
**characterised in**
**that** the screen element (11) is kept free from blockages by foil-like screen clearers (20).

7. Process according to Claim 5,
**characterised in**
**that** the screen element (11) is kept free from blockages by clearer blades (22) which are attached to a drum-shaped rotor (21) and extend at least over 200 mm at the circumference.

8. Process according to any one of the preceding Claims,
**characterised in**
**that** the fine fractionation (3) is adapted such that the fine fraction (6) contains fine impurities with a grain size spectrum which is significantly not greater than 150 µm.

9. Process according to any one of the preceding Claims,
**characterised in**
**that** the fine fractionation (3) is adapted such that the fine impurities which are contained in the fine fraction (6) have a grain size spectrum which in the "Somerville" test process is obtained as smalls at a slot width of 150 µm.

10. Process according to any one of the preceding Claims,
**characterised in**
**that** small adhesive particles, so-called microstickies, are removed as fine impurities.

11. Process according to any one of the preceding Claims,
**characterised in**
**that** the fine fractionation (3) is carried out with a feed consistency of between 0.5 and 1.5 %.

12. Process according to any one of the preceding Claims,
**characterised in**
**that** the fine fractionation (3) is carried out at a temperature of between 40° and 80° C.

## Revendications

1. Procédé d'élimination d'impuretés particulaires fines, notamment de micro-corps collants (micro-stickies), se trouvant dans de la pâte fibreuse à base de vieux papiers (S),
dans lequel on fait passer la pâte fibreuse à base de vieux papiers (S) , après sa mise en suspension dans l'eau (W), c'est-à-dire après ce qu'il est convenu d'appeler la désagrégation (1), et après une éventuelle épuration préalable (2), à travers au moins un fractionnement fin (3) utilisant un élément de tamisage (11),
dont la fraction fine (6) évacue les impuretés fines et dont la fraction grossière (5) évacue la majeure partie des fibres de papier,
les orifices de tamisage des éléments de tamisage (11) étant des fentes d'une largeur d'au maximum 0,15 mm ou des trous ronds d'un diamètre d'au maximum 2 mm,
le fractionnement fin (3) étant effectué à une consistance d'amenée comprise entre 0,5 et 2,5 %, et
les impuretés fines étant ensuite rassemblées dans l'écume et éliminées de la fraction fine (6) en utilisant un procédé de flottation (4, 4').

2. Procédé selon la revendication 1,
**caractérisé en ce que**
le fractionnement fin (3) et le processus de flottation (4) sont réglés de sorte que la pâte acceptée (8) de flottation du processus de flottation (4) contienne des parties constitutives, notamment de la pâte fine de fibres de papier, qui sont bonnes pour la production de papier.

3. Procédé selon la revendication 1 ou 2,
**caractérisé en ce que**
la pâte acceptée (8) provenant de la flottation est amenée, au moins en partie, à la fraction grossière (5) issue du fractionnement fin (3).

4. Procédé selon la revendication 1,
**caractérisé en ce que**
la fraction fine (6) est débarrassée de ses matières au cours d'un processus de flottation (4') et **en ce qu'**une eau clarifiée (10) est ainsi produite.

5. Procédé selon la revendication 1, 2, 3 ou 4,
**caractérisé en ce que**
le fractionnement fin (3) est effectué dans un classeur à pression (15) qui contient au moins un élément de tamisage (11) pourvu d'orifices, et ce de manière que la fraction grossière (5) soit constituée par la surverse et la fraction fine (6) par le filtrat.

6. Procédé selon la revendication 5,
**caractérisé en ce que**
l'on empêche que l'élément de tamisage (11) se bouche grâce à des racles de tamis (20) en forme de lame.

7. Procédé selon la revendication 5,
**caractérisé en ce que**
l'on empêche que l'élément de tamis (11) se bouche grâce à des pales de raclage (22), placées sur un rotor (21) en forme de tambour, qui s'étendent sur la circonférence sur au moins 200 mm.

8. Procédé selon l'une des revendications précédentes,
**caractérisé en ce que**
le fractionnement fin (3) est réglé de sorte que la fraction fine (6) contienne des impuretés fines ayant un spectre granulométrique qui n'est typiquement pas supérieur à 150 *µ*m.

9. Procédé selon l'une des revendications précédentes,
**caractérisé en ce que**
le fractionnement fin (3) est réglé de sorte que les impuretés fines contenues dans la fraction fine (6) présentent un spectre granulométrique qui ressort sous forme de passé-à-travers dans la procédure d'essai "Somerville" avec une largeur de fente de 150 *µ*m.

10. Procédé selon l'une des revendications précédentes,
**caractérisé en ce que**,
en matière d'impuretés fines, ce sont des petites particules collantes, ce qu'il est convenu d'appeler des micro-corps collants, qui sont éliminées.

11. Procédé selon l'une des revendications précédentes,
**caractérisé en ce que**
le fractionnement fin (3) est effectué à une consistance d'amenée comprise entre 0,5 et 1,5 %.

12. Procédé selon l'une des revendications précédentes,
**caractérisé en ce que**
le fractionnement fin (3) est effectué à une température comprise entre 40 °C et 80 °C.
